# EUROPÄISCHE PATENTSCHRIFT

(11) **EP 3 720 789 B1**
(45) Veröffentlichungstag und Bekanntmachung des Hinweises auf die Patenterteilung: **12.08.2026**
(21) Anmeldenummer: 18810983.9
(22) Anmeldetag: 26.11.2018
(51) Int. Cl.: B65G 15/62, B65G 21/06

(54) **TRANSPORTVORRICHTUNG**
TRANSPORT DEVICE
APPAREIL DE TRANSPORT

(30) Priorität: 08.12.2017 DE 102017129293
(43) Veröffentlichungstag der Anmeldung: 14.10.2020
(73) Patentinhaber: KHS GmbH, 44143 Dortmund (DE)
(72) Erfinder: GRÄVINGHOLT, Stefan, 58454 Witten (DE); GREIVING, Thomas, 59348 Lüdinghausen (DE); PAROTH, Berthold, 44289 Dortmund (DE); SARAJLIJA, Zlatko, 44369 Dortmund (DE); STIENEN, Thomas, 59425 Unna (DE)
(86) Internationale Anmeldenummer: PCT/EP2018/082527
(87) Internationale Veröffentlichungsnummer: WO 2019/110349

(56) Entgegenhaltungen:
- EP-A2- 1 787 925
- WO-A1-01/32534
- WO-A1-2018/157992
- WO-A1-91/17938
- AU-B1- 503 456
- FR-A- 1 066 962
- FR-A1- 2 915 474
- GB-A- 2 176 454

## Beschreibung

Die Erfindung bezieht sich auf eine Transportvorrichtung zum Transportieren von Transportgut in einer Transportrichtung gemäß dem Oberbegriff des Patentanspruches 1.

Gattungsgemäße Transportvorrichtungen werden in der Getränkeindustrie zum Transportieren von Stückgütern verwendet und weisen in der Regel eine Vielzahl von jeweils eine geschlossene Schlaufe bildende und umlaufend angetriebene Transportelemente, insbesondere auch in Form von Transportketten oder Scharnierbandketten, auf. Derartige Transportvorrichtungen sind dem einschlägigen Fachmann hinlänglich bekannt. Die Transportelemente bilden jeweils mit ihrer oberen, sich gegen wenigstens eine Gleitführung abstützenden Länge die gemeinsame horizontale oder im Wesentlichen horizontale Transportebene oder -fläche, auf die das Transportgut mit seinem Transportgutboden oder seinem Standboden aufsteht.

Bei den derartigen Transportvorrichtungen handelt es sich dabei insbesondere um Transporteure der Getränkeindustrie, die beispielsweise eine Leistung von mehr als 10000, bevorzugt von mehr als 50000 beförderten Stückgütern, beispielsweise Behältern, pro Stunde aufweisen.

Mithin umfassen derartige Transportvorrichtungen üblicherweise ein Gerüst bzw. einen Maschinenrahmen, an dem die Transportelemente aufgenommen, gehalten und/oder geführt sind. Einzelne Gerüste sind dabei in der Regel an bestimmte Rastermaße hinsichtlich ihrer jeweiligen Länge und/oder Breite angepasst, so dass einzelne Gerüste kombiniert werden können und die einzelnen Maschinen einer Gesamtproduktionsanlage innerhalb der Getränkeindustrie miteinander verbindbar sind. Hierfür weisen die Gerüste einen Grundträger auf, an dem Profilelemente wie beispielsweise M-Profile, U-Profile, Flachprofile, Rohrprofile insbesondere jedoch C-Profil-Elemente, angeordnet sind. An der Oberseite dieser Profilelemente verlaufen die Transportelemente, vorzugsweise die Transportketten, wobei diese durch Antriebsmotoren endlos umlaufend bewegt werden und dabei auf den Profilelementen gleitend geführt sind.

Ebenfalls ist es bekannt, zur Herabsetzung des Reibungskoeffizienten zwischen den Profilelementen und den Transportelementen Gleitelemente, insbesondere Gleitleisten, vorzusehen, die einen geringen Reibungskoeffizienten aufweisenden Belag für die Transportelemente ausbilden, um dadurch den Verschleiß an und die erforderlichen Antriebskräfte für die Transportelemente zu reduzieren.

Dabei werden im Stand der Technik die einzelnen Bauteile des Maschinenrahmens der Transportvorrichtung mittels Schraubverbindungen miteinander verbunden, was für die Montage sehr zeitaufwändig und somit teuer ist.

Aus der Druckschrift FR 2915474 A1 ist eine Förderbandstützvorrichtung bekannt geworden, umfassend einen Rahmen , mindestens einen Gleitschuh, der eine Auflagefläche für das Band bildet, wobei der oder jeder Gleitschuh vom Rahmen getragen wird; Befestigungsmittel für den oder jeden Gleitstein am Rahmen, wobei die Befestigungsmittel eine mit dem Gleitstein verbundene Führung, einen in die Führung eingreifenden Keil, der mit dem Rahmen zusammenwirkt, um den Gleitstein in mindestens einer Richtung zu fixieren, und einen in die Führung eingreifenden Stift umfassen, der mit dem Keil zusammenwirkt, um den Keil entlang der Länge der Führung in mindestens einer Richtung zu arretieren. Die FR 1915474 A1 offenbart auch eine Transportvorrichtung gemäß dem Oberbegriff des Anspruchs 1.

Ferner ist aus der WO 91/17 938 A1 eine Förderbandstützvorrichtung bekannt geworden, umfassend eine oder mehrere längliche Aufprallanordnungen, die unter dem oberen Lauf eines Förderbandes angeordnet sind und sich in Längsrichtung in Bewegungsrichtung des Förderbandes erstrecken, wobei jede Anordnung einen Stützbalken, eine Elastomerschicht, die an der oberen Oberfläche der Förderbandvorrichtung befestigt ist, sowie Stützbalken und einen länglichen Reibungsblock umfasst, der auf der Elastomerschicht angeordnet ist. Die Oberseite des Reibungsblocks steht dabei in Gleitkontakt mit der Unterseite des oberen Laufs des Förderbandes. Diese Druckschrift zeichnet sich insbesondere dadurch aus, dass die seitliche Lage des Reibungsblocks durch Führungen, die sich vom Stützbalken erstrecken und verschiebbar in eine oder mehrere Längsnuten im Reibungsblock eingreifen, so angeordnet sind, dass sie eine vertikale Bewegung des Reibungsblocks relativ zum Stützbalken als Elastomerschicht ermöglichen.

Ausgehend hiervon liegt der vorliegenden Erfindung die Aufgabe zu Grunde, eine Transportvorrichtung zum Transportieren von Transportgut in einer Transportrichtung bereitzustellen, die die vorgenannten Nachteile vermeidet und hierbei insbesondere eine einfache und gleichzeitig zuverlässig stabile Verbindung von zwei Bauteilen der Transportvorrichtung ermöglicht. Diese Aufgabe wird mit den Merkmalen des Patentanspruches 1 gelöst. Die Unteransprüche betreffen dabei besonders bevorzugte Ausführungsvarianten der Erfindung.

Der wesentliche Aspekt gemäß der Transportvorrichtung zum Transportieren von Transportgut in einer Transportrichtung besteht dabei darin, dass die zumindest eine lösbare Befestigungseinrichtung zur Verbindung des Profilelementes mit dem Grundträger als Schnellbefestigungseinrichtung ausgebildet ist. Besonders vorteilhaft können damit der Grundträger und das Profilelement ohne Verwendung einer Schraubverbindung verbunden werden. Durch die Schnellbefestigungseinrichtung wird zudem eine besonders stabile und lagefixierte Verbindung der beiden Bauteile zueinander erreicht.

Gemäß einer vorteilhaften Ausführungsvariante kann vorgesehen sein dass die Schnellbefestigungseinrichtung zwischen einer Verriegelungsposition und einer Freigabeposition verstellbar ausgebildet, und zwar derart, dass die Schnellbefestigungseinrichtung in der Verriegelungsposition das Profilelement fest jedoch lösbar mit dem Grundträger verbindet und in der Freigabeposition wieder freigibt, also löst.

Gemäß der Erfindung ist vorgesehen, dass die Schnellbefestigungseinrichtung jeweils einen sich entlang einer Mittellängsachse der Schnellbefestigungseinrichtung erstreckenden und einander gegenüberliegenden Befestigungsabschnitt aufweist, mit dem das Profilelement und/oder der Grundträger verbindbar sind.

Gemäß einer nochmals weiteren vorteilhaften Ausführungsvariante kann vorgesehen sein, dass der erste und/oder zweite Befestigungsabschnitt zur kraftschlüssigen und/oder formschlüssigen Verbindung in der Verriegelungsposition der Schnellbefestigungseinrichtung ausgebildet ist.

Gemäß einer nochmals weiteren vorteilhaften Ausführungsvariante kann vorgesehen sein, dass der erste und/oder zweite Befestigungsabschnitt in der Verriegelungsposition in das Profilelement und/oder den Grundträger eingesteckt ist und zwar insbesondere in eine Vorlochung des Grundträgers und/oder eine Ausnehmung des Profilelementes.

Gemäß einer nochmals weiteren vorteilhaften Ausführungsvariante kann vorgesehen sein, dass der erste und/oder zweite Befestigungsabschnitt in der Verriegelungsposition in das Profilelement und/oder den Grundträger eingeschnappt ist.

Gemäß einer nochmals weiteren vorteilhaften Ausführungsvariante kann vorgesehen sein, dass der der erste und/oder zweite Befestigungsabschnitt in der Verriegelungsposition mit dem Profilelement und/oder den Grundträger fest verbunden ist, indem der erste und/oder zweite Befestigungsabschnitt mit einem Verriegelungselement die Vorlochung des Grundträgers und/oder die Ausnehmung des Profilelementes hintergreift.

Gemäß einer nochmals weiteren vorteilhaften Ausführungsvariante kann vorgesehen sein, dass die Schnellbefestigungseinrichtung um eine Mittellängsachse zwischen einer Verriegelungsposition und einer Freigabeposition drehbar ausgebildet. Erfindungsgemäß ist dabei vorgesehen, dass die Schnellbefestigungseinrichtung als Drehverriegelungseinrichtung ausgebildet ist, die in der Verriegelungsposition eine kraftschlüssige und/oder formschlüssige Verbindung herstellt.

Gemäß der Erfindung ist vorgesehen, dass die Schnellbefestigungseinrichtung in dem ersten Befestigungsabschnitt einen freiendseitigen ersten Verriegelungsabschnitt und in dem zweiten Befestigungsabschnitt einen freiendseitigen zweiten Verriegelungsabschnitt aufweist, dass der Grundträger zur lösbar klemmenden Befestigung zumindest in einem zumindest abschnittsweise flachen Abschnitt eine von der Kreisform abweichende Vorlochung oder Öffnung aufweist, dessen Querschnitt an den Längsschnitt des ersten Verriegelungsabschnitts angepasst ist, und zwar derart, dass der erste Verriegelungsabschnitt durch die Vorlochung hindurchführbar ist und die Schnellbefestigungseinrichtung durch Verdrehung um die Mittellängsachse mit dem ersten Befestigungsabschnitt an dem Profilelement klemmend und/oder formschlüssig befestigbar ist, und dass das Profilelement zumindest einen eine Ausnehmung ausbildenden Profilierungsabschnitt aufweist, dessen Querschnitt an den Querschnitt des zweiten Verriegelungsabschnitt angepasst ist, und zwar derart, dass zur lösbar klemmenden Befestigung des ersten Befestigungsabschnittes an dem Profilelement durch Verdrehung des zweiten Verriegelungsabschnittes um die Mittelängsachse der zweite Verriegelungsabschnitt zumindest abschnittsweise formschlüssig in der Ausnehmung aufnehmbar ist.

Gemäß einer nochmals weiteren vorteilhaften Ausführungsvariante kann vorgesehen sein, dass der erste Befestigungsabschnitt den freiendseitigen ersten Verriegelungsabschnitt mit zumindest einem sich radial von der Mittellängsachse nach außen erstreckenden Verriegelungselement aufweist.

Gemäß einer nochmals weiteren vorteilhaften Ausführungsvariante kann vorgesehen sein, dass der erste Befestigungsabschnitt einen sich an den freiendseitigen ersten Verriegelungsabschnitt entlang der Mittellängsachse daran anschließenden ersten Anlageabschnitt aufweist, der eine sich senkrecht zur Mittellängsachse erstreckende Aufnahmenut ausbildet.

Gemäß einer nochmals weiteren vorteilhaften Ausführungsvariante kann vorgesehen sein, dass der Klemmkörper im Bereich seines freien Endabschnittes an zumindest zwei sich gegenüberliegenden Seiten jeweils gerade Anlagenflächen aufweist.

Gemäß einer nochmals weiteren vorteilhaften Ausführungsvariante kann vorgesehen sein, dass das Profilelement zumindest in seinem Profilierungsabschnitt einen mittleren sowie zwei seitliche Schenkelabschnitt aufweist, die im Querschnitt im Wesentlichen C-förmig ausgebildet sind und die Ausnehmung ausbilden.

Gemäß einer nochmals weiteren vorteilhaften Ausführungsvariante kann vorgesehen sein, dass sich der Klemmkörper in der Verriegelungsposition zumindest mit den geraden Anlagenflächen des freien Endabschnittes klemmend gegen die entsprechenden Innenseiten der seitlichen Schenkelabschnitt des Profilierungsabschnittes einspreitzt, so dass der Klemmkörper in der Ausnehmung einen Klemmsitz ausbildet.

Gemäß einer nochmals weiteren vorteilhaften Ausführungsvariante kann vorgesehen sein, dass der Klemmkörper im seitlichen Querschnitt der Freigabeposition eine Breite aufweist, die derart an den Querschnitt des Profilierungsabschnittes angepasst ist, dass der Klemmkörper in seiner Freigabeposition in die durch den Profilierungsabschnitt ausgebildete Ausnehmung einführbar ist.

Gemäß einer nochmals weiteren vorteilhaften Ausführungsvariante kann vorgesehen sein, dass die zumindest eine Schnellbefestigungseinrichtung zur direkten oder indirekten lösbaren Verbindung weiterer Bauteile oder Komponenten an dem Maschinenrahmen ausgebildet ist, wobei es sich bei den Bauteilen oder Komponenten um elektrische Bauteile, beispielsweise um Reparaturschalter und/oder Sensoren, und/oder mechanische Bauteile, beispielsweise um Spiegel für Lichtschranken und/oder Halter für Geländer zum Führen von Behältern und/oder Haltebleche und/oder Halteleisten und/oder Schaltkästen für die Aufnahme elektrischer Schaltungen, handelt.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine schematische Seitenansicht einer beispielhaften Transportvorrichtung zum Transportieren von Stückgütern
- Fig. 2: eine schematische Schnittdarstellung entlang der Schnittlinie A aus Figur 1
- Fig.3: in schematischer Seitenansicht eine teilweise dargestellte beispielhafte Transportvorrichtung mit Anbaukomponente
- Fig. 4: eine schematische Seitenansicht einer beispielhaften Ausführungsvariante einer erfindungsgemäßen Schnellbefestigungseinrichtung in einer Verriegelungsposition,
- Fig. 5a: eine schematische Explosionsansicht der Ausführungsvariante der erfindungsgemäßen Schnellbefestigungseinrichtung gemäß Figur 3 in einer Freigabeposition,
- Fig. 5b: eine schematische Draufsicht auf die Vorlochung oder Öffnung eines ansonsten nur abschnittsweise dargestellten Grundträgers,
- Fig. 6a und 6b: in perspektivischer bzw. seitlicher schematischer Schnittdarstellung eine Ausführungsvariante einer alleingestellten Schnellbefestigungseinrichtung,
- Fig. 7a und 7b: jeweils in schematischer Seitenansicht verschiedene Ausführungsvarianten einer alleingestellten Schnellbefestigungseinrichtung.
- Fig. 8: in schematischer Seitenansicht eine weitere Ausführungsvariante einer erfindungsgemäßen Schnellbefestigungseinrichtung.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

Die in den Figuren allgemein mit 100 bezeichnete, beispielhafte Transportvorrichtung dient insbesondere zum Transportieren von Transportgut 102 in wenigstens einer Transportrichtung A zwischen jeweils nicht nähergehend dargestellten Behälterbehandlungsmaschinen und/oder Überschubstationen und/oder Transferstationen und/oder Überleitstationen für die Verpackungs- und/oder Getränkeindustrie. Besonders vorteilhaft weist die Transportvorrichtung 100 dabei eine Leistung von mehr als 10000, bevorzugt von mehr als 50000 beförderten Stückgütern 102, beispielsweise Behältern, pro Stunde auf.

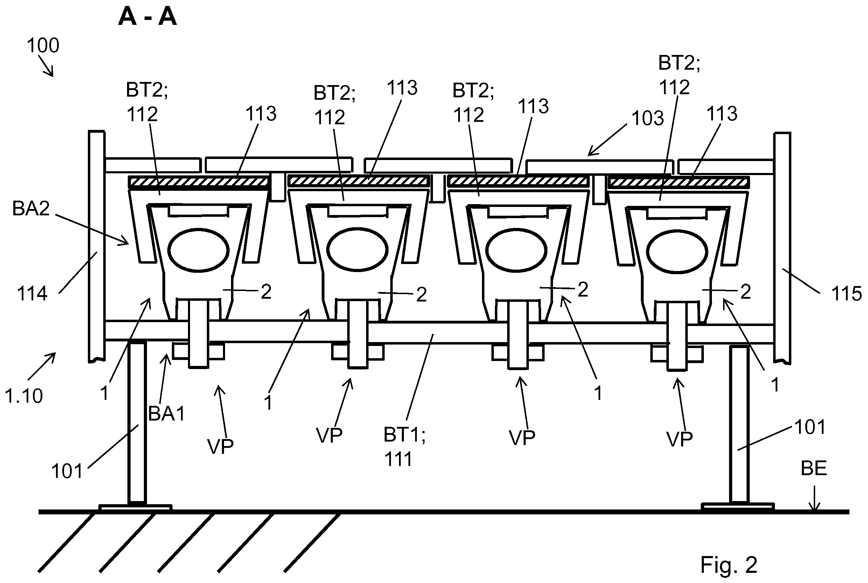

Insbesondere umfasst die Transportvorrichtung 100 hierfür wenigstens ein, eine geschlossene Schlaufe ausbildendes und in Transportrichtung A endlos umlaufend angetriebenes Transportelement 103, das beispielsweise als Transportriemen, Transportkette, Scharnierbandkette oder Transportmatte ausgebildet sein kann. Das Transportelement 103 bildet mit seiner oberen, sich gegen wenigstens eine, in der Figur 2 näher dargestellte, Gleitleiste 113 abstützende Länge eine horizontale oder im Wesentlichen horizontale Transportebene oder -fläche TE aus, auf der das Transportgut 102 mit seinem Transportgutboden oder seinem Standboden aufsteht. Dabei können auch mehrere, beispielsweise zwei, drei, vier oder mehr Transportelemente 103 vorgesehen sein, die mehrzügig, d.h. quer oder senkrecht zur Transportrichtung A einander benachbart angeordnet sind, sodass die mehreren Transportelemente 103 zumindest mit einem Teil ihrer jeweils oberen Länge ihrer entsprechenden Schlaufe die gemeinsame Transportebene TE ausbilden, auf der das Transportgut 102 mit seiner Bodenfläche zumindest teilweise aufstehen kann.

An dem bezogen auf die Transportrichtung A vorderen Ende 1.11 sowie bezogen auf die Transportrichtung A rückwärtigen Ende 1.12 ist das wenigstens eine Transportelement 103 jeweils über Umlenkeinrichtungen 141, 142 geführt, wobei das wenigstens eine Transportelement 103 insbesondere an seinem vorderen Ende 1.11 über eine vordere Umlenkeinrichtung 141 und an seinem rückwärtigen Ende 1.12 über eine rückwärtige Umlenkeinrichtung 142 geführt ist. Zwischen der vorderen und der rückwärtigen Umlenkeinrichtung 141, 142 ist mittels des wenigstens einen Transportelementes 103 eine Transportstrecke TS für das Transportgut 102 ausbildet. Die Transportstrecke TS, auf der das Transportgut 102 befördert werden kann, ist also insbesondere von der rückwärtigen Umlenkeinrichtung 142 in Transportrichtung A bis zur vorderen Umlenkeinrichtung 141 ausgebildet.

Dabei kann auch vorgesehen sein, dass die vordere und/oder die hintere Umlenkeinrichtung 141, 142 motorisch antreibbar ausgebildet ist. Beispielsweise kann die vordere und/oder hintere Umlenkeinrichtung 141, 142 als Elektromotor, vorzugsweise als getriebeloser Elektromotor, beispielsweise in Form eines direkt angetriebenen Elektromotors, bevorzugt in Form eines Schrittmotors, eines Servomotors oder eines Torquemotors, ausgebildet sein.

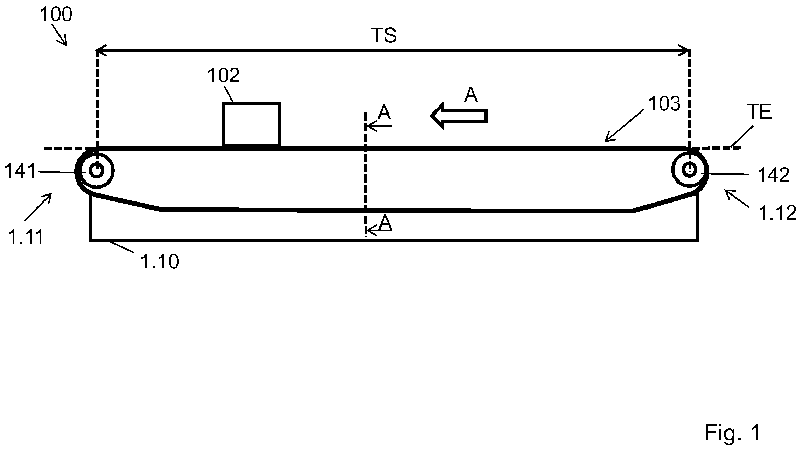

Zudem weist die Transportvorrichtung 100, wie in der Figur 1 nur schematisch angedeutet, einen Maschinenrahmen 1.10 auf, der ein Gerüst ausbildet und an dem sämtliche Komponenten der Transportvorrichtung 100 angeordnet bzw. aufgenommen sind und mittels dem die Transportvorrichtung 100 über Stützelemente 101 bzw. Beine auf einer Bodeneben BE aufsteht. Wie hierbei insbesondere aus der Figur 2 mehr im Detail ersichtlich, weist der Maschinenrahmen 1.10 wenigstens einen sich über die gesamte Transportelementbreite, also quer zur Transportrichtung A, erstreckenden Grundträger 111 auf, an dem zwei Stützelemente 101 fest angeordnet sind. Der Grundträger 111 bildet dabei ein Trägerelement, beispielsweise einen aus Edelstahl herstellten U-Profilträger aus. Vorzugsweise umfasst der Maschinenrahmen 110 zwei oder auch mehrere Grundträger 111, die über die gesamte Länge der Transportstrecke TS beispielweise in gleichmäßigen Abständen verteilt vorgesehen sind, und sich über jeweils zumindest zwei Stützelemente 101 auf der Bodeneben BE abstützen. Dabei ist vorteilhaft zumindest ein Grundträger 111 im Bereich des vorderen Endes 1.11 und zumindest ein weiterer Grundträger 111 im Bereich des hinteren Endes 1.12 der Transportvorrichtung 100 vorgesehen.

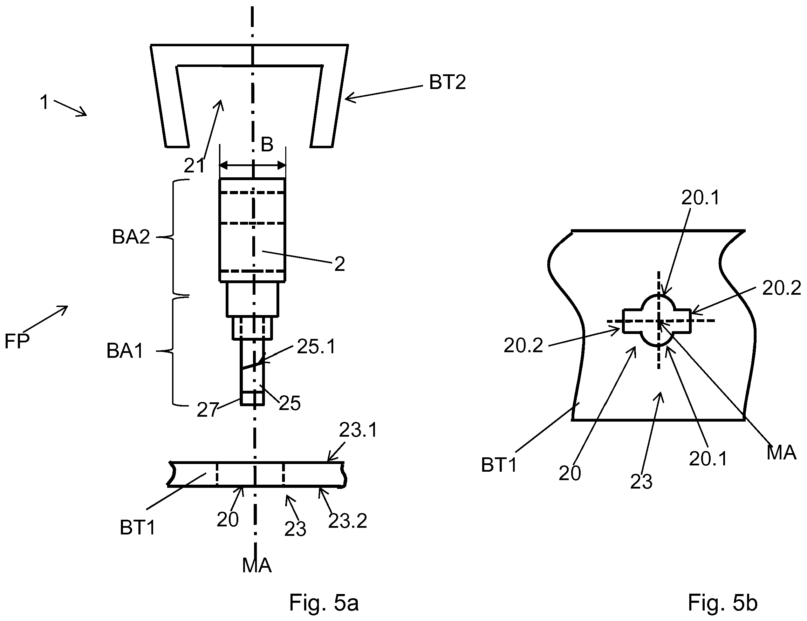

Der Grundträger 111 weist dabei insbesondere in einem flachen Flächenabschnitt 23, der beispielsweise durch einen der Schenkel des als U-Profilträger ausgebildeten Grundträger 111 gebildet sein kann, eine Vorlochung 20 mit einer von der Kreisform abweichenden Geometrie auf. Die Figur 5b zeigt dabei in schematischer Draufsicht einen teilweise dargestellten flachen Flächenabschnitt 23 eines Grundträgers 111 mit einer Vorlochung 20. Insbesondere kann die Vorlochung 20 spiegelsymmetrisch ausgebildet sein und zwei identische Kreisbogenabschnitte 20.1 sowie zwei identische Rechteckabschnitte 20.2 aufweisen.

Wie insbesondere aus der Figur 2 ersichtlich, kann der sich quer zur Transportrichtung A erstreckende Grundträger 111 auch mehrere Vorlochungen 20 aufweisen, die im Wesentlichen jeweils unterhalb einer korrespondierenden Gleitleiste 113 vorgesehen ist.

Dabei ist das wenigstens eine Transportelement 103 zumindest entlang der Transportstrecke TS auf wenigstens einer Gleitleiste 113 gleitend aufliegend geführt, wobei die wenigstens eine Gleitleiste 113 in einer Ebene parallel oder im Wesentlichen parallel unterhalb der Transportebene TE vorgesehen ist. Vorteilhaft sind jedoch mehrere Gleitleisten 113 vorgesehen, und zwar besonders vorteilhaft entlang der gesamten Transportstrecke TS entlang derer das Transportelement 103 bewegt wird. Es können dabei sowohl quer als auch längs zur Transportstrecke TS mehrere Gleitleisten 113 unterhalb des Transportelementes 103 vorgesehen sein. Beispielweise können, wie in der Figur 2 dargestellt, vier quer zur Transportstrecke TS angeordnete Gleitleisten 113 vorgesehen sein, die in ihrer jeweiligen Längserstreckung im Wesentlichen parallel zueinander, also in Transportrichtung A, angeordnet sind .

Auch können nicht nur quer, sondern auch längs der Transportstrecke TS mehrere Gleitleisten 113 vorgesehen sein, die einander unmittelbar benachbart über vorzugsweise die gesamte Länge der Transportstrecke TS vorgesehen sind. Weiterhin vorteilhaft sind die dann in Längsrichtung der Transportstrecke TS vorgesehenen Gleitleisten 113 gegenseitig fluchtend zueinander angeordnet, und zwar derart, dass eine aneinander liegende gerade Reihe von sich gegenseitig unmittelbar benachbart anschließenden Gleitleisten 113 ausbildet ist. Ebenfalls ist bevorzugt vorgesehen, dass auch die in der Breite nebeneinander angeordneten und aneinander anschließenden Gleitleisten zu einander fluchten.

Vorzugsweise weisen die Gleitleisten 113 auf ihrer dem Transportelement 103 zugewandten Oberseite eine einen geringen Reibkoeffizienten aufweisende Oberfläche auf, die insbesondere aus einem Kunststoff gebildet sein kann.

Die wenigstens eine Gleitleiste 113 ist dabei zumindest abschnittsweise entlang der Transportstrecke TS an zumindest einem Profilelement 112 angeordnet, das seinerseits über zumindest eine erfindungsgemäße Schnellbefestigungseinrichtung 2 an dem wenigstens einen Grundträger 111 des Maschinenrahmens 110 angeordnet ist.

Dabei kann das zumindest eine Profilelement 112 in seinem Querschnitt im Wesentlichen C-förmig ausgebildet sein. Das wenigstens eine Profilelement 112 weist dabei drei Schenkelabschnitte, nämlich einen mittleren Schenkelabschnitt 22.1, sowie zwei seitliche Schenkelabschnitte 22.2, auf. Auf dem mittleren Schenkabschnitt 22.1 ist dabei die Gleitleiste 113 vorzugsweise fest angeordnet, beispielsweise verschraubt oder verklebt. Derartige Profilelemente 112 sind dem Fachmann auf dem Gebiet der Transportvorrichtungen 100 in der Getränkeindustrie als C-Profilelemente bekannt. Sie erstrecken sich wiederum in einer parallelen Ebene unterhalb der durch die Gleitleisten 113 aufgespannten Ebene und damit auch in einer Ebene unterhalb der Transportebene TE. Die seitlichen Schenkelabschnitte 22.2 sind in ihrer jeweiligen Längserstreckung des Querschnitts zu dem Querschnitt des mittleren Schenkelabschnitts 22.1 in einem Winkel orientiert, der vorzugsweise kleiner als 90° Grad ausgebildet ist, so dass die jeweiligen freien Enden 22.3 der beiden seitlichen Schenkelabschnitte 22.2 im Querschnitt spitzwinklig in einer gedachten Verlängerung der freien Enden 22.3 aufeinander zulaufen würden. Der mittlere sowie die seitlichen Schenkelabschnitte 22.1, 22.2 begrenzen in ihrem Querschnitt eine Ausnehmung 21, die nach unten, also in Richtung des Tragkörpers 111 offen und von dort aus zugänglich ausgebildet ist. Die Ausnehmung 21 bildet dabei also eine Nut aus, die in ihrem Querschnitt eine Art Kegelstumpf ausbildet, sich also auf der den Gleitleisten 113 abgewandten Seite mit den beiden seitlichen Schenkelabschnitten 22.2 verjüngt. Dabei weist der mittlere Schenkelabschnitt 22.1 im Wesentlichen eine Breite quer zur Transportrichtung A auf, die der im Querschnitt der Figur 2 dargestellten Breite der wenigstens einen Gleitleiste 113 entspricht. Die in einer nicht dargestellten Draufsicht im Wesentlichen rechteckförmig an ihrer Oberseite ausgebildete Gleitleiste 113 kann eine Länge in Transportrichtung A aufweisen, die der Länge des Profilelements 112 entspricht. Auch kann das Profilelement 112, insbesondere deren mittlerer Schenkelabschnitt 22.1, in einer nicht dargestellten Draufsicht im Wesentlichen rechteckförmig ausgebildet sein.

Erfindungsgemäß ist hierbei vorgesehen, dass zumindest das eine Profilelement 112 über wenigstens eine Schnellbefestigungseinrichtung 2 an einem Grundträger 111 des Maschinenrahmens 110 angeordnet ist, wobei die Schnellbefestigungseinrichtung 2 zur lösbaren Verbindung des Profilelementes 112 mit dem Grundträger 111 ausgebildet ist.

Bevorzugt ist die Schnellbefestigungseinrichtung 2 zwischen einer Verriegelungsposition VP und einer Freigabeposition FP verstellbar ausgebildet, und zwar derart, dass die Schnellbefestigungseinrichtung 2 in der Verriegelungsposition VP das Profilelement 112 fest - jedoch lösbar - mit dem Grundträger 111 verbindet und in der Freigabeposition FP wieder freigibt, also löst.

Erfindungsgemäß ist vorgesehen, dass die Schnellbefestigungseinrichtung 2 jeweils einen sich entlang einer Mittellängsachse MA der Schnellbefestigungseinrichtung 2 erstreckenden und einander gegenüberliegenden Befestigungsabschnitt BA1, BA2 aufweist, mit dem das Profilelement 112 und der Grundträger 111 verbindbar sind. Insbesondere ist ein erster Befestigungsabschnitt BA1 vorgesehen, der mit dem Profilelement 112 verbindbar ist, sowie ein zweiter Befestigungsabschnitt BA2, der mit dem Grundträger 111 verbindbar ist.

Vorzugsweise ist der erste und/oder zweite Befestigungsabschnitt BA1, BA2 zur kraftschlüssigen und/oder formschlüssigen Verbindung in der Verriegelungsposition VP der Schnellbefestigungseinrichtung 2 ausgebildet.

Dabei kann auch vorgesehen sein, dass der erste Befestigungsabschnitt BA1 in der Verriegelungsposition VP in den Grundträger 111 eingesteckt ist. Insbesondere kann der erste Befestigungsabschnitt BA1 in der Verriegelungsposition VP in die Vorlochung 20 des Grundträgers 111 eingesteckt sein.

Mithin kann auch vorgesehen sein, dass der der erste und/oder zweite Befestigungsabschnitt BA1, BA2 in der Verriegelungsposition VP in das Profilelement 112 und/oder den Grundträger 111 eingeschnappt ist. Insbesondere kann der erste und/oder zweite Befestigungsabschnitt BA1, BA2 hierfür ein Verriegelungselement 25 aufweisen, das in der Verriegelungsposition VP in die Vorlochung 20 des Grundträgers 111 und/oder die Ausnehmung 21 des Profilelementes 112 eingeschnappt ist.

Ferner kann auch vorgesehen sein, dass der der erste Befestigungsabschnitt BA1 in der Verriegelungsposition VP mit dem Grundträger 111 fest verbunden ist, indem der erste Befestigungsabschnitt BA1 mit einem Verriegelungselement 25 die Vorlochung 20 des Grundträgers 111 hintergreift.

Bevorzugt ist die Schnellbefestigungseinrichtung 2 um eine Mittellängsachse MA zwischen einer Verriegelungsposition VP und einer Freigabeposition FP drehbar ausgebildet, und zwar derart, dass die Schnellbefestigungseinrichtung 2 in der Verriegelungsposition VP das Profilelement 112 fest - jedoch lösbar - mit dem Grundträger 111 verbindet und in der Freigabeposition FP wieder freigibt, also löst. Hierbei ist Schnellbefestigungseinrichtung 2 besonders bevorzugt als Drehverriegelungseinrichtung ausgebildet, die in der Verriegelungsposition VP eine kraftschlüssige und/oder formschlüssige Verbindung herstellt.

Auch können mittels der Schnellbefestigungseinrichtung 2 weitere Bauteile oder Komponenten direkt oder indirekt an dem Maschinenrahmen 110 der Transportvorrichtung 100 lösbar angeordnet, insbesondere lösbar verbunden bzw. befestigt sein.

Dabei kann es sich bei den Bauteilen oder Komponenten beispielsweise um elektrische Bauteile, wie Reparaturschalter und/oder Sensoren, handeln. Auch kann es sich bei den Bauteilen oder Komponenten um mechanische Bauteile, wie Spiegel für Lichtschranken und/oder Halter für Geländer zum Führen von Behältern und/oder Haltebleche für das Befestigen weiterer Bauteile und/oder Halteleisten für das Befestigen weiterer Bauteile und/oder Schaltkästen für die Aufnahme elektrischer Schaltungen, handeln.

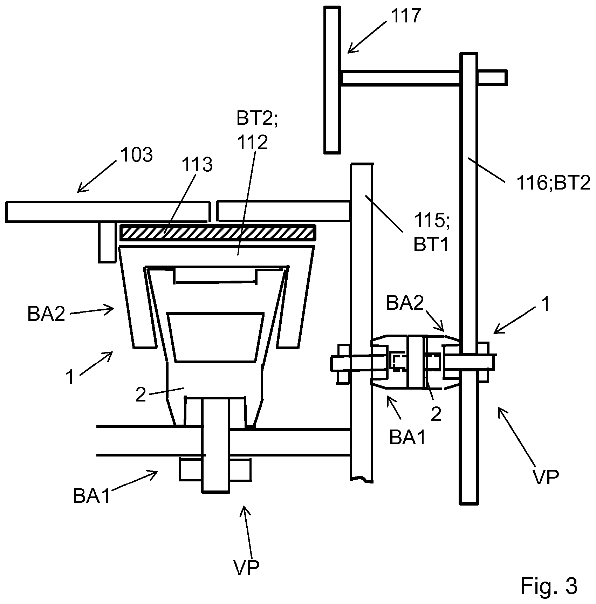

Beispielhaft ist in diesem Zusammenhang in der Figur 3 eine Ausführungsvariante gezeigt, bei der an dem Maschinenrahmen 110, insbesondere an einem an dem Maschinenrahmen 110 vorgesehenen rechten und/oder linken Gerüstblech 114, 115, mittels der Schnellbefestigungseinrichtung 2 ein Halteelement 116, insbesondere ein Haltblech oder eine Halteleiste, mit einem daran befestigten Führungsgeländer 117 für das Transportgut 102 lösbar befestigt ist. Die Schnellbefestigungseinrichtung 2 steht also mit ihrem ersten Befestigungsabschnitt BA1 mit dem Gerüstblech 115 und mit ihrem zweiten Befestigungsabschnitt BA2 mit dem Halteelement 116 lösbar in Wirkeingriff.

Mehr im Detail sind in dem Ausführungsbeispiel der Figur 2 mehrere, insbesondere vier Schnellbefestigungseinrichtung 2 gezeigt, die mit ihrem jeweils ersten Befestigungsabschnitt BA1 mit einem gemeinsamen Grundträger 111 und mit ihrem zweiten Befestigungsabschnitt BA2 mit jeweils einem Profilelement 112 lösbar verbunden sind. Auf der Oberseite der jeweiligen Profilelemente 112 kann eine Gleitleiste 113 vorgesehen sein, die fest mit dem jeweiligen Profilelement 112 verbunden, insbesondere verschraubt, verlötet, verklebt oder verschweißt, sein kann. Auf den Gleitleisten 113 wiederum liegt das oder die Transportelemente 103 auf, das über die Oberseite der Gleitleisten 113 gleitend geführt wird. Zudem sind jeweils seitlich des Grundträger 111 ein rechtes und linkes Gerüstblech 114, 115 vorgesehen. Vorzugsweise erstrecken sich die Profilelemente 112 und/oder die Gleitleisten 113 und/oder die Gerüstbleche 114, 115 über die gesamte Länge der Transportstrecke TS und können dabei einteilig oder vorzugsweise jeweils mehrteilig ausgebildet sein.

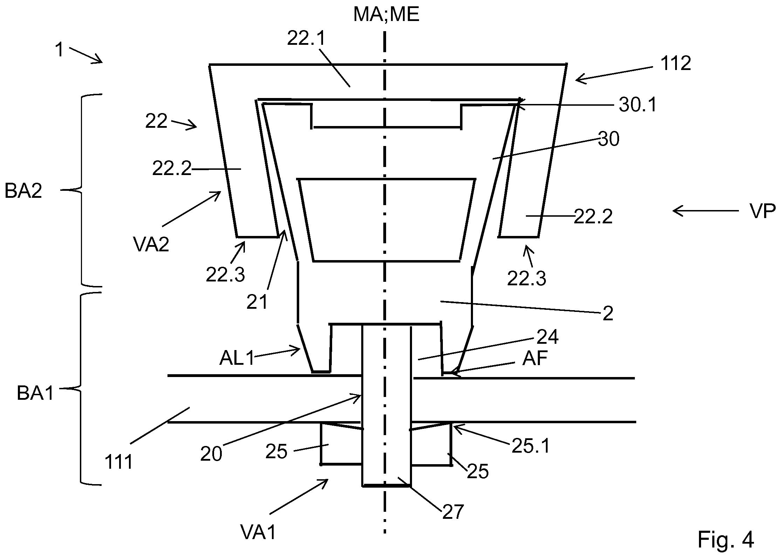

Die Figur 4 zeigt dabei eine schematische Seitenansicht einer Ausführungsform der erfindungsgemäßen Schnellbefestigungseinrichtung 2 in einer Verriegelungsposition VP, in der das Profilelement 112 lösbar mit dem Grundträger 111 mittels der Befestigungseinrichtung 2 verbunden ist. In der in Figur 4 dargestellten Seitenansicht spannt die Schnellbefestigungseinrichtung 2 eine Mittelebene ME durch die Mittellängsachse MA auf, die zur Zeichenebene, also der dargestellten Seitenansicht, senkrecht orientiert ist.

Insbesondere steht dabei der erste Befestigungsabschnitt BA1 mit dem Grundträger 111 und der zweite Befestigungsabschnitt BA2 mit dem Profilelement 112 in lösbarem Wirkeingriff, so dass der Grundträger 111 über den ersten Befestigungsabschnitt BA1 und das Profilelement 112 über den zweiten Befestigungsabschnittes BA2 miteinander verbindbar sind.

Ferner weist der erste Befestigungsabschnitt BA1 einen freiendseitigen ersten Verriegelungsabschnitt VA1 und/oder der zweite Befestigungsabschnitt BA2 einen zweiten Verriegelungsabschnitt VA2 auf mittels der Grundträger 111 über die Schnellbefestigungseinrichtung 2 in der Verriegelungsposition VP fest gehalten und in jeweiligen Freigabeposition FP von der Schnellbefestigungseinrichtung 2 gelöst, also freigegeben, werden kann.

Gemäß der Ausführungsvariante der Figur 4 weist der Grundträger zur lösbar klemmenden Befestigung zumindest in einem zumindest abschnittsweise flachen Abschnitt 23 eine von der Kreisform abweichende Vorlochung oder Öffnung 20 auf, dessen Querschnitt an den Längsschnitt des ersten Verriegelungsabschnitts VA1 angepasst ist, und zwar derart, dass der erste Verriegelungsabschnitt VA1 durch die Vorlochung 20 hindurchführbar ist und die Schnellbefestigungseinrichtung 2 durch Verdrehung um die Mittellängsachse MA mit dem ersten Befestigungsabschnitt BA1 an dem Grundträger 111 klemmend befestigbar ist.

Ferner kann der erste Befestigungsabschnitt BA1 neben dem freiendseitigen ersten Verriegelungsabschnitt VA1 einen sich entlang der Mittellängsachse MA in Richtung des zweiten Befestigungsabschnittes BA2 daran anschließenden ersten Anlageabschnitt AL1 aufweisen, der eine sich vorzugsweise senkrecht zur Mittellängsachse MA erstreckende Aufnahmenut 24 ausbildet. Insbesondere kann der erste Anlagenabschnitt AL1 unmittelbar benachbart an dem zweiten Befestigungsabschnitt BA2 vorgesehen, insbesondere an diesem angeordnet sein.

Die Aufnahmenut 24 ist dabei zumindest teilweise umlaufend um die Mittellängsachse MA, vorzugsweise vollumlaufend um die Mittellängsachse MA vorgesehen, und bildet an dem dem Grundträger 111 zugewandten Flächenabschnitt eine Anlagefläche AF für das Profilelement 112 in der Verriegelungsposition VP aus. Insbesondere ist die Aufnahmenut 24 in ihrer Dimensionierung an die Vorlochung 20 angepasst, derart, dass die Aufnahmenut 24 die Vorlochung 20 in der Verrieglungsposition VP nicht durchgreift bzw. durch die Vorlochung 20 hindurchgeführt werden kann, sondern sich an dem flachen Abschnitt 23 auf der dem zweiten Befestigungsabschnitt BA2 zugewandten Seite zumindest teilumfänglich um die Vorlochung 20 herum an dem flachen Abschnitt 23 abstützt, insbesondere kontaktschlüssig zur Anlage gelangt.

Überdies weist der erste Befestigungsabschnitt BA1 im ersten Verriegelungsabschnitt VA1 zumindest ein Verriegelungselement 25 auf, das an einem die Mittellängsachse MA koaxial umschließenden Rohrabschnitt 27 vorgesehen ist und sich von der Mittellängsachse MA ausgehend radial nach außen erstreckt und als Verrieglungsfinger ausgebildet sein kann. Vorteilhaft sind dabei mehrere, insbesondere zwei Verriegelungselemente 25 vorgesehen, die sich an vorzugsweise gegenüberliegenden Seiten des Rohrabschnittes 27 vorgesehen sind und sich von der Mittellängsachse MA ausgehend jeweils radial nach außen erstrecken und vorzugsweise jeweils als Verriegelungsfinger ausgebildet sind. Die Längserstreckung des Abschnittes 27 kann dabei an die Dicke des zu verriegelnden Grundträgers 111 anpasst sein.

Dabei weist das wenigstens eine Verriegelungselement 25 an seiner dem zweiten Befestigungsabschnitt BA2 zugewandten Oberseite eine schräg, insbesondere spitzwinklig zur Mittellängsachse MA, orientiere Anlagefläche 25.1 auf, wie insbesondere aus der Figur 5a entnehmbar ist.

In der Verriegelungsposition VP ist das wenigstens eine Verriegelungselement 24 durch die Vorlochung 20 hindurchgeführt und wird relativ zum Grundträger 111 um vorzugsweise 40° Grad von der Freigabeposition FP in die Verriegelungsposition VP verdreht, derart, dass das wenigstens eine Verriegelungselement 25 die Vorlochung 20 hintergreift und sich an dem flachen Abschnitt 23 auf der dem zweiten Befestigungsabschnitt BA2 abgewandten Seite zumindest teilumfänglich um die Vorlochung 20 herum an dem flachen Abschnitt 23 abstützt, insbesondere kontaktschlüssig zur Anlage gelangt.

Mehr im Detail kommt die schräge Anlagefläche 25.1 des wenigstens einen Verriegelungselementes 25 durch die Drehung des ersten Verriegelungsabschnitts VA1 zur klemmenden sowie kontaktschlüssigen Anlage an dem flachen Abschnitt 23 des Grundträger 111 auf der dem zweiten Befestigungsabschnitt BA2 abgewandten Seite, derart, dass der Grundträger 111 in dem flachen Abschnitt 23 auf der dem zweiten Befestigungsabschnitt BA2 zugewandten Seite gegen die Anlagenfläche AF der Aufnahmenut 24 gedrückt wird und der flache Abschnitt 23 zwischen der Anlagefläche AF und der schrägen Anlagefläche 25.1 klemmend gehalten wird.

Wie insbesondere aus dem in Figur 5b in schematischer Draufsicht teilweise dargestellten flachen Flächenabschnitt 23 des Grundträger 111 ersichtlich, weist die darin vorgesehene Vorlochung 20 eine von der Kreisform abweichende Geometrie im Querschnitt der Draufsicht auf. Insbesondere kann die Vorlochung 20 spielsymmetrisch ausgebildet sein und zwei identische Kreisbogenabschnitte 20.1 sowie zwei identische Rechteckabschnitte 20.2 aufweisen, die derart an den ersten Verriegelungsabschnitt VA1 geometrisch angepasst sind, dass der erste Verriegelungsabschnitt VA1, insbesondere das zumindest einen Verriegelungselement 25, durch die Rechtseckabschnitte 20.2 hindurchführbar ist und durch die 40°Grad Drehung in der Verriegelungsposition VP mittels der Kreisbogenabschnitte 20.1 vor einem Herausziehen aus der Vorlochung 20 gesperrt sind. Dabei kann die Vorlochung 20 in den flachen Flächenabschnitt 23 beispielsweise durch Lasern, Stanzen oder Bohren erzeugt werden.

Der flache Flächenabschnitt 23 des Grundträgers 111 weist eine plan, also eben, ausgebildete und dem zweiten Befestigungsabschnitt BA2 zugewandte Oberseite 23.1 sowie eine plan ausgebildete und dem zweiten Befestigungsabschnitt BA2 abgewandte Unterseite 23.2 auf. Insbesondere spannen die Oberseite 23.1 und Unterseite 23.2 im flachen Flächenabschnitt 23 parallel oder im Wesentlichen parallel zueinander verlaufende Ebenen auf. In anderen Worten weist der flache Flächenabschnitt 23 also eine konstante oder näherungsweise konstante Flächenstärke, insbesondere Flächendicke, auf.

Dabei weist gemäß der Ausführungsvariante der Figur 4 das Profilelement 112 zumindest die eine Ausnehmung 21 ausbildenden Profilierungsabschnitt 22 auf, dessen Querschnitt an den Querschnitt des zweiten Verriegelungsabschnitt VA2 angepasst ist, und zwar derart, dass zur lösbar klemmenden Befestigung des zweiten Befestigungsabschnittes BA2 am Profilelement 112 durch Verdrehung des zweiten Verriegelungsabschnittes VA2 um die Mittelängsachse MA der zweite Verriegelungsabschnitt VA2 zumindest abschnittsweise formschlüssig und/oder kraftschlüssig in der Ausnehmung 21 aufnehmbar ist.

Die Schnellbefestigungseinrichtung 2 weist in ihrem zweiten Verriegelungsabschnitt VA2 einen Klemmkörper 30 auf, der in seiner Draufsicht, also senkrecht zur Mittelebene ME, im Wesentlichen oval ausgebildet ist, und sich in dabei in Richtung des ersten Befestigungsabschnittes BA1 verjüngt, d.h. einen im Vergleich dazu kleineren ovalen Durchmesser aufweist, so dass der Klemmkörper 30 an seinem freien, dem zweiten Bauteil BT2 zugewandten Endabschnitt 30.1, die größte Länge L im seitlichen Querschnitt seiner Verriegelungsposition VP aufweist. Insbesondere weist der im Wesentlichen in seiner Draufsicht oval ausgebildete Klemmkörper 30 an zumindest zwei sich vorzugsweise gegenüberliegenden Seiten im Bereich des freien Endabschnittes 30.1 jeweils gerade Anlagenflächen 30.2, 30.3 auf, mit denen sich der Klemmkörper 30 in seiner Verriegelungsposition VP klemmend gegen die entsprechenden Innenseiten der beiden seitlichen Schenkelabschnitte 22.2 einspreitzt und so einen Klemmsitz ausbildet. Dabei sind die beiden seitlichen Schenklabschnitte 22.2 derart elastisch verformbar ausgebildet, dass sie bei einem Eindrehen der Anlagenflächen 30.2, 30.3 des Klemmkörpers 30 von der Freigabeposition FP in die Verriegelungsposition VP nach außen, also von der Mittelebene ME weggerichtet, ausgelenkt werden - also elastisch nachgeben.

Zwischen der Freigabeposition FP und der Verriegelungsposition VP wird der zweite Verriegelungsabschnitt VA2 der Schnellbefestigungseinrichtung 2 um vorzugsweise 40° Grad relativ zu dem Profilierungsabschnitt 22 verdreht. Die Figur 4 zeigt dabei insbesondere die Verriegelungsposition VP, während die Figur 5a die Freigabeposition FP zeigt. Weiterhin vorteilhaft kann die Schnellbefestigungseinrichtung 2 einteilig, insbesondere einstückig, ausgebildet sein, so dass sich bei einer Verdrehung des zweiten Befestigungsabschnitts BA2 der Schnellbefestigungseinrichtung 2 auch der erste Befestigungsabschnitt BA1 mit verdreht, also beispielsweise von der Freigabeposition FP in die Verriegelungsposition VP gedreht wird. Erster und zweiter Befestigungsabschnitt BA1, BA2 sind also kraftschlüssig miteinander verbunden.

Dabei weist der Klemmkörper 30 im seitlichen Querschnitt der Freigabeposition FP eine Breite B auf, dass der Klemmkörper 30 in seiner Freigabeposition FP in die durch den Profilierungsabschnitt 22 ausgebildete Ausnehmung 21 einführbar ist.

Überdies weist der Klemmkörper 30 im Bereich der sich gegenüberliegenden Anlageflächen 30.2, 30.3 eine derartige Länge L, also Abstand der Anlageflächen 30.2, 30.3 auf, dass sich der Klemmkörper 30 in seiner Verriegelungsposition VP klemmend gegen die entsprechenden Innenseiten der beiden seitlichen Schenkelabschnitte 22.2 des zweiten Bauteils BT2 einspreitzt und so einen Klemmsitz erzeugbar ist. Weiterhin ist der Klemmkörper 30 derart ausgebildet, dass dieser durch eine Verdrehung von der Freigabeposition FP in die Verriegelungsposition VP gegen die Unterseite des mittleren Schenkelabschnittes 22.1 gedrückt wird und an der Unterseite des mittleren Schenkelabschnittes 22.1 bei Erreichen der Verrieglungsposition VP zur Anlage gelangt, so dass eine definierte Lage der Befestigungseinrichtung 2 relativ zu dem Profilelement 112 herstellbar ist.

Insbesondere können die Länge L und Breite B des Klemmkörpers 30 an den Profilierungsabschnitt 22, insbesondere an die Dimensionierung des mittleren sowie der seitlichen Schenkelabschnitte 22.2 angepasst sein.

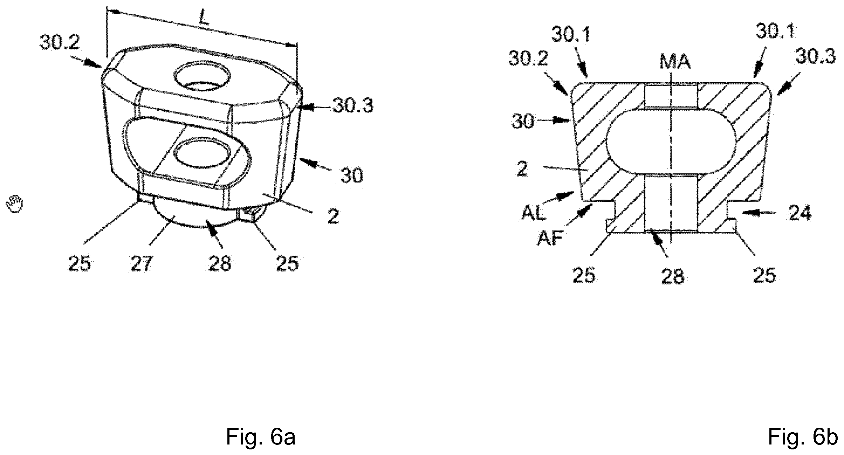

Wie insbesondere aus der Figur 6a oder 6b ersichtlich ist, weist die Schnellbefestigungseinrichtung 2 eine den ersten und zweiten Befestigungsabschnitt BA1, BA2 durchdringende Durchführung in Form einer Öffnung 28 auf, die im Bereich des Rohrabschnittes 27 zumindest abschnittsweise einen Innensechskant ausweisen kann, der eine Angriffsfläche für ein Werkzeug, beispielweise einen Inbusschlüssel, ausgebildet, so dass die Drehbewegung zwischen der Freigabeposition FP und der Verriegelungsposition VP über das Werkzeug auf die Befestigungseinrichtung 2 einleitbar ist.

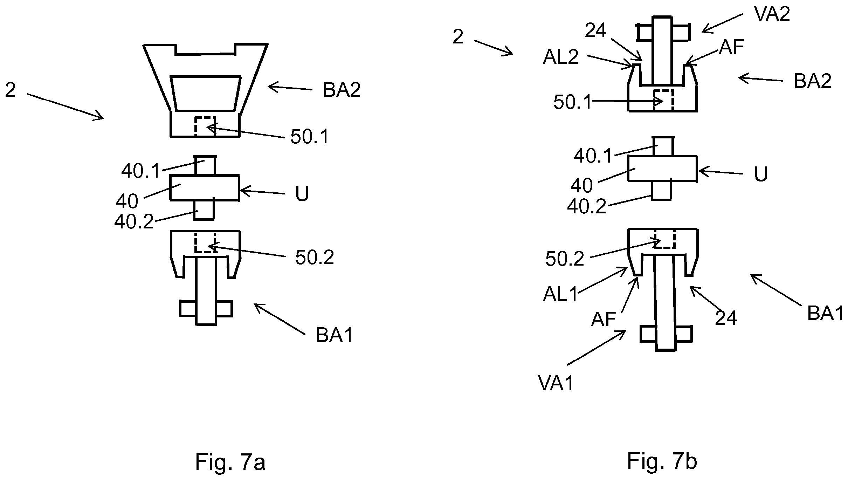

Die Figuren 7a bis 7b zeigen jeweils in vereinfachter schematischer Seitenansicht weitere Ausführungsvarianten der Schnellbefestigungseinrichtung 2. Unterschiedlich zu der Ausführungsvariante der Figuren 4 bis 6 ist die jeweilige Schnellbefestigungseinrichtung 2 gemäß der Ausführungsvarianten der Figuren 7a und 7b mehrteilig ausgebildet. Insbesondere ist dabei der jeweilige erste Befestigungsabschnitt BA1 mittels eines Zwischenstücks 40 mit dem entsprechenden zweiten Befestigungsabschnitt BA2 fest verbunden. Hierfür kann das als Abstandstandhalter ausgebildete Zwischenstück 40 aus einem Vollmaterial herstellt sein und beispielsweise zwei beispielsweise nase- oder rohrförmige Anschlussabschnitte 40.1, 40.2 aufweisen, die in Wirkeingriff mit dem ersten bzw. zweiten Befestigungsabschnitt BA1, BA2 stehen. Beispielsweise kann der Anschlussanschnitt 40.1, 40.2 mit einem korrespondierenden Aufnahmeabschnitt 50.1, 50.2 des ersten bzw. zweiten Befestigungsabschnitts BA1, BA2 verschraubt, verklebt, verlötet oder verschweißt sein. Der jeweilige Anschlussabschnitt 50.1, 50.2 kann dabei in seiner geometrischen Ausgestaltung an den entsprechenden Anschlussabschnitt 40.1, 40.2 angepasst, beispielsweise als Sackloch ausgebildet sein.

Dabei kann die Umfangsfläche U des Zwischenstücks 40 als Angriffsfläche für ein Werkzeug, beispielweise einen Gabelschlüssel oder Schraubenschlüssel, ausgebildet sein, so dass die Drehbewegung zwischen der Freigabeposition FP und der Verriegelungsposition VP über das Werkzeug auf die Befestigungseinrichtung 2 einleitbar ist. Beispielsweise kann die Umfangsfläche U n-eckig, insbesondere sechs-eckig, ausgebildet sein.

Figur 7b zeigt dabei eine Ausführungsvariante bei der der erste und zweite Befestigungsabschnitt BA1, BA2 identisch ausgebildet sind und zwar insbesondere wie der erste Befestigungsabschnitt BA1 der Ausführungsvariante der Figuren 4 und 5. Alternativ ist es im Rahmen der Erfindung auch möglich, dass der erste und zweite Befestigungsabschnitt BA1, BA2 identisch ausgebildet sind und zwar derart, wie der zweite Befestigungsabschnitt BA2 der Figuren 4 und 5. Insbesondere können mittels einer derartigen Schnellbefestigungseinrichtung 2 weitere Bauteile oder Komponenten direkt oder indirekt an dem Maschinenrahmen 110 der Transportvorrichtung 100 lösbar angeordnet, insbesondere lösbar verbunden bzw. befestigt sein.

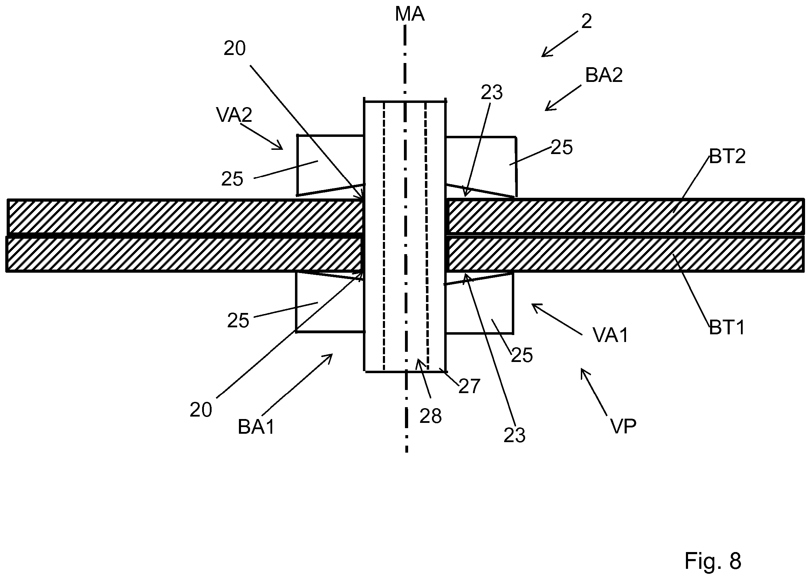

Figur 8 zeigt in einer schematischen Seitenansicht eine weitere Ausführungsvariante der Schnellbefestigungseinrichtung 2, die im Unterschied zu der Ausführungsvarianten der Figuren 4 bis 7 keinen ersten und zweiten Anlagenabschnitt AL1, AL2 und keine sich senkrecht zur Mittellängsachse MA erstreckende Aufnahmenut 24 kennt und zur lösbaren Anordnung weiterer Bauteile oder Komponenten direkt oder indirekt an dem Maschinenrahmen 110 der Transportvorrichtung 100 ausgebildet ist.

Hierfür wird in der Ausführungsvariante der Figur 8 die jeweilige Anlagefläche durch das entsprechende erste und zweite Bauteil selbst ausgebildet, das jeweils zumindest den abschnittsweise flachen Abschnitt 23 und eine von der Kreisform abweichende Vorlochung oder Öffnung 20 aufweist, gegen das sich der erste und zweite Verriegelungsabschnitt VA1, VA2 wechselseitig in der Verriegelungsposition VP abstützt. Hierfür weist sowohl der erste als auch der zweite Befestigungsabschnitt BA1, BA2 jeweils zumindest ein Verriegelungselement 25, wie es im Zusammenhang der Ausführungsvariante der Figuren 4 und 5 nähergehend erläutert wurde.

Weiterhin kann auch die Schnellbefestigungseinrichtung 2 gemäß der Figur 8 eine den ersten und zweiten Befestigungsabschnitt BA1, BA1 durchdringende Durchführung in Form einer Öffnung 28 aufweisen, die im Bereich des Rohrabschnittes 27 zumindest abschnittsweise einen Innensechskant ausweisen kann, der eine Angriffsfläche für ein Werkzeug, beispielweise einen Inbusschlüssel, ausgebildet, so dass die Drehbewegung zwischen der Freigabeposition FP und der Verriegelungsposition VP über das Werkzeug auf die Befestigungseinrichtung 2 einleitbar ist.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 100: Transportvorrichtung
- 101: Stützelement
- 102: Transportgut
- 103: Transportelement
- 110: Maschinenrahmen
- 111: Grundträger
- 112: Profilelement
- 113: Gleitleiste
- 114: Gerüstblech
- 115: Gerüstblech
- 116: Halteelement
- 117: Führungsgeländer
- 141: vordere Umlenkreinrichtung
- 142: rückwärtige Umlenkeinrichtung

- 1.11: vorderes Ende
- 1.12: rückwärtiges Ende
- 2: Schnellbefestigungseinrichtung
- 20: Vorlochung
- 20.1: Kreisbogenabschnitt
- 20.2: Rechteckabschnitt
- 21: Ausnehmung
- 22: Profilierungsabschnitt
- 22.1: mittlerer Schenkelabschnitt
- 22.2: seitlicher Schenkelabschnitt
- 22.3: freies Ende
- 23: flacher Abschnitt
- 23.1: Oberseite
- 23.2: Unterseite
- 24: Aufnahmenut
- 25: Verriegelungselement
- 25.1: schräge Anlagefläche
- 27: Abschnitt
- 28: Öffnung

- 30: Klemmkörper
- 30.1: Endabschnitt
- 30.2, 30.3: gerade Anlagenfläche

- 40: Zwischenstück
- 40.1: Anschlussabschnitt
- 40.2: Anschlussabschnitt
- 50.1: Aufnahmeabschnitt
- 50.2: Aufnahmeabschnitt

- AL1: erster Anlagenabschnitt
- AL2: zweiter Anlagenabschnitt
- AF: Anlagefläche
- BA1: erster Befestigungsabschnitt
- BA2: zweiter Befestigungsabschnitt
- BT1: erstes Bauteil
- BT2: zweites Bauteil
- VA1: erster Verriegelungsabschnitt
- VA2: zweiter Verriegelungsabschnitt

- A: Transportrichtung
- BE: Bodenebene
- TS: Transportstrecke
- VP: Verriegelungsposition
- FP: Freigabeposition
- ME: Mittelebene
- MA: Mittellängsasche
- L: Länge
- B: Breite
- U: Umfangsfläche

## Patentansprüche

1. Transportvorrichtung zum Transportieren von Transportgut (102) in einer Transportrichtung (A), umfassend wenigstens einen Maschinenrahmen (110), an dem wenigstens ein, eine Schlaufe bildendes und umlaufend angetriebenes Transportelement (103) angeordnet ist, wobei das Transportelement (103) über eine bezogen auf die Transportrichtung (A) vordere Umlenkeinrichtung (141) sowie über eine bezogen auf die Transportrichtung (A) rückwärtige Umlenkeinrichtung (142) geführt ist, wobei zwischen der vorderen und der rückwärtigen Umlenkeinrichtung (141, 142) mittels des wenigstens einen Transportelementes (103) eine Transportstrecke (TS) für das Transportgut (102) ausbildet ist, wobei das wenigstens eine Transportelement (103) vorzugsweise zumindest entlang der Transportstrecke (TS) auf wenigstens einer Gleitleiste (113) gleitend aufliegend geführt ist, wobei die wenigstens eine, vorzugsweise vorgesehene Gleitleiste (113) zumindest abschnittsweise entlang der Transportstrecke (TS) an zumindest einem Profilelement (112) angeordnet ist, wobei das zumindest eine Profilelement (112) über zumindest eine lösbare Befestigungseinrichtung an wenigstens einem Grundträger (111) des Maschinenrahmens (110) angeordnet ist,
und wobei die zumindest eine lösbare Befestigungseinrichtung zur Verbindung des Profilelementes (112) mit dem Grundträger (111) als Schnellbefestigungseinrichtung (2) ausgebildet ist, und wobei die Schnellbefestigungseinrichtung (2) jeweils einen sich entlang einer Mittellängsachse (MA) der Schnellbefestigungseinrichtung (2) erstreckenden und einander gegenüberliegenden Befestigungsabschnitt (BA1, BA2) aufweist, mit dem das Profilelement (112) und/oder der Grundträger (111) verbindbar sind, **dadurch gekennzeichnet, dass** die Schnellbefestigungseinrichtung (2) in dem ersten Befestigungsabschnitt (BA1) einen freiendseitigen ersten Verriegelungsabschnitt (VA1) und in dem zweiten Befestigungsabschnitt (BA2) einen freiendseitigen zweiten Verriegelungsabschnitt (VA2) aufweist, dass der Grundträger (111) zur lösbar klemmenden Befestigung zumindest in einem zumindest abschnittsweise flachen Abschnitt (23) eine von der Kreisform abweichende Vorlochung oder Öffnung (20) aufweist, dessen Querschnitt an den Längsschnitt des ersten Verriegelungsabschnitts (VA1) angepasst ist, und zwar derart, dass der erste Verriegelungsabschnitt (VA1) durch die Vorlochung (20) hindurchführbar ist und die Schnellbefestigungseinrichtung (2) durch Verdrehung um die Mittellängsachse (MA) mit dem ersten Befestigungsabschnitt (BA1) an dem Grundträger (111) klemmend befestigbar ist, und dass das Profilelement (112) zumindest einen eine Ausnehmung (21) ausbildenden Profilierungsabschnitt (22) aufweist, dessen Querschnitt an den Querschnitt des zweiten Verriegelungsabschnitt (VA2) angepasst ist, und zwar derart, dass zur lösbar klemmenden Befestigung des zweiten Befestigungsabschnittes (BA2) an dem Profilelement (112) durch Verdrehung des zweiten Verriegelungsabschnittes (VA2) um die Mittelängsachse (MA) der zweite Verriegelungsabschnitt (VA2) zumindest abschnittsweise formschlüssig in der Ausnehmung (21) aufnehmbar ist.

2. Transportvorrichtung nach Anspruch 1, **dadurch gekennzeichnet, dass** die Schnellbefestigungseinrichtung (2) zwischen einer Verriegelungsposition (VP) und einer Freigabeposition (FP) verstellbar ausgebildet, und zwar derart, dass die Schnellbefestigungseinrichtung (2) in der Verriegelungsposition (VP) das Profilelement (112) fest jedoch lösbar mit dem Grundträger (111) verbindet und in der Freigabeposition (FP) wieder freigibt.

3. Transportvorrichtung nach einem der vorhergehenden Ansprüche, **dadurch gekennzeichnet, dass** der erste und/oder zweite Befestigungsabschnitt BA1, BA2 zur kraftschlüssigen und/oder formschlüssigen Verbindung in der Verriegelungsposition (VP) der Schnellbefestigungseinrichtung (2) ausgebildet ist.

4. Transportvorrichtung nach einem der vorhergehenden Ansprüche, **dadurch gekennzeichnet, dass** der erste Befestigungsabschnitt (BA1) in der Verriegelungsposition (VP) in den Grundträger (111) eingesteckt ist und zwar insbesondere in eine Vorlochung (20) des Grundträgers (111).

5. Transportvorrichtung nach einem der vorhergehenden Ansprüche, **dadurch gekennzeichnet, dass** der der erste und/oder zweite Befestigungsabschnitt (BA1, BA2) in der Verriegelungsposition (VP) in das Profilelement (112) und/oder den Grundträger (111) eingeschnappt ist.

6. Transportvorrichtung nach Anspruch 5, **dadurch gekennzeichnet, dass** der erste Befestigungsabschnitt (BA1) in der Verriegelungsposition (VP) mit dem Grundträger (111) fest verbunden ist, indem der erste Befestigungsabschnitt (BA1) mit einem Verriegelungselement (25) die Vorlochung (20) des Grundträgers (111) hintergreift.

7. Transportvorrichtung nach einem der vorhergehenden Ansprüche, **dadurch gekennzeichnet, dass** die Schnellbefestigungseinrichtung (2) um eine Mittellängsachse (MA) zwischen einer Verriegelungsposition (VP) und einer Freigabeposition (FP) drehbar ausgebildet.

8. Transportvorrichtung nach einem der vorhergehenden Ansprüche, **dadurch gekennzeichnet, dass** die Schnellbefestigungseinrichtung (2) als Drehverriegelungseinrichtung ausgebildet ist, die in der Verriegelungsposition (VP) eine kraftschlüssige und/oder formschlüssige Verbindung herstellt.

9. Transportvorrichtung nach einem der vorhergehenden Ansprüche, **dadurch gekennzeichnet, dass** der erste Befestigungsabschnitt (BA1) den freiendseitigen ersten Verriegelungsabschnitt (VA1) mit zumindest einen sich radial von der Mittellängsachse (MA) nach außen erstreckenden Verriegelungselement (25) aufweist.

10. Transportvorrichtung nach Anspruch 9, **dadurch gekennzeichnet, dass** der erste Befestigungsabschnitt (BA1) einen sich an den freiendseitigen ersten Verriegelungsabschnitt (VA1) entlang der Mittellängsachse (MA) daran anschließenden ersten Anlageabschnitt (AL1) aufweist, der eine sich senkrecht zur Mittellängsachse erstreckende Aufnahmenut (24) ausbildet.

11. Transportvorrichtung nach Anspruch 10, **dadurch gekennzeichnet, dass** die Aufnahmenut (24) zumindest teilweise umlaufend, vorzugsweise vollumlaufend, um die Mittellängsachse (MA) ausgebildet ist und an dem dem Grundträger (111) zugewandten Flächenabschnitt eine Anlagefläche (AF) ausbildet.

12. Transportvorrichtung nach einem der Ansprüche 9 bis 11, **dadurch gekennzeichnet, dass** in einer Verriegelungsposition (VP) das wenigstens eine Verriegelungselement (25) durch die Vorlochung (20) hindurchgeführt ist und die Befestigungseinrichtung (2) relativ zum ersten Bauteil (BT1) um vorzugsweise 40° Grad von einer Freigabeposition (FP) in die Verriegelungsposition (VP) verdreht ist, und zwar derart, dass das wenigstens eine Verriegelungselement (25) die Vorlochung (20) in der Verriegelungsposition (VP) hintergreift und sich an dem flachen Abschnitt (23) auf der dem zweiten Befestigungsabschnitt (BA2) abgewandten Seite zumindest teilumfänglich um die Vorlochung (20) herum an dem flachen Abschnitt (23) abstützt.

13. Transportvorrichtung nach Anspruch 9 und 12, **dadurch gekennzeichnet, dass** das wenigstens eine Verriegelungselement (25) durch die Drehung des ersten Verriegelungsabschnitts (VA1) zur klemmenden sowie kontaktschlüssigen Anlage an dem flachen Abschnitt (23) des Grundträgers (111) auf der dem zweiten Befestigungsabschnitt (BA2) abgewandten Seite gelangt, und zwar derart, dass der Grundträgers (111) in dem flachen Abschnitt (23) auf der dem zweiten Befestigungsabschnitt (BA2) zugewandten Seite gegen die Anlagenfläche (AF) der Aufnahmenut (24) gedrückt ist und der flache Abschnitt (23) zwischen der Anlagefläche (AF) und dem Verriegelungselement (25) klemmend gehalten ist.

14. Transportvorrichtung nach Anspruch 1, **dadurch gekennzeichnet, dass** die Schnellbefestigungseinrichtung (2) in ihrem zweiten Verriegelungsabschnitt (VA2) einen Klemmkörper (30) aufweist, der in seinem seitlichen Querschnitt der Verriegelungsposition (VP) an dem dem Profilelement (112) zugewandten Endabschnitt (30.1) die größte Länge (L) aufweist und sich entlang der Mittellängsachse (MA) in Richtung des ersten Befestigungsabschnittes (BA1) im Querschnitt verjüngt.

15. Transportvorrichtung nach Anspruch 14, **dadurch gekennzeichnet, dass** der Klemmkörper (30) im Bereich seines freien Endabschnittes (30.1) an zumindest zwei sich gegenüberliegenden Seiten jeweils gerade Anlagenflächen (30.2, 30.3) aufweist.

16. Transportvorrichtung nach Anspruch 14 oder 15, **dadurch gekennzeichnet, dass** das Profilelement (112) zumindest in seinem Profilierungsabschnitt (22) einen mittleren sowie zwei seitliche Schenkelabschnitt (22.1, 22.2) aufweist, die im Querschnitt im Wesentlichen C-förmig ausgebildet sind und die Ausnehmung (21) ausbilden.

17. Transportvorrichtung nach Anspruch 16, **dadurch gekennzeichnet, dass** sich der Klemmkörper (30) in der Verriegelungsposition (VP) zumindest mit den geraden Anlagenflächen (30.2, 30.3) des freien Endabschnittes (30.1) klemmend gegen die entsprechenden Innenseiten der seitlichen Schenkelabschnitt (22.2) des Profilierungsabschnittes (22) einspreitzt, so dass der Klemmkörper (30) in der Ausnehmung (21) einen Klemmsitz ausbildet.

18. Transportvorrichtung nach einem der Ansprüche 16 bis 17, **dadurch gekennzeichnet, dass** der Klemmkörper (30) im seitlichen Querschnitt der Freigabeposition (FP) eine Breite (B) aufweist, die derart an den Querschnitt des Profilierungsabschnittes (22) angepasst ist, dass der Klemmkörper (30) in seiner Freigabeposition (FP) in die durch den Profilierungsabschnitt (22) ausgebildete Ausnehmung (21) einführbar ist.

19. Transportvorrichtung nach einem der vorhergehenden Ansprüche, **dadurch gekennzeichnet, dass** die zumindest eine Schnellbefestigungseinrichtung (2) zur direkten oder indirekten lösbaren Verbindung weiterer Bauteile oder Komponenten an dem Maschinenrahmen (110) ausgebildet ist, wobei es sich bei den Bauteilen oder Komponenten um elektrische Bauteile, beispielsweise um Reparaturschalter und/oder Sensoren, und/oder mechanische Bauteile, beispielsweise um Spiegel für Lichtschranken und/oder Halter für Geländer zum Führen von Behältern und/oder Haltebleche und/oder Halteleisten und/oder Schaltkästen für die Aufnahme elektrischer Schaltungen, handelt.

## Claims

1. Conveying device for conveying goods (102) in a direction of conveyance (A), comprising at least one machine frame (110) on which at least one conveying element (103) driven continuously and forming a loop is arranged, wherein the conveying element (103) is guided over a front deflector (141) relative to the direction of conveyance (A) and over a rear deflector (142) relative to the direction of conveyance (A), wherein between the front and the rear deflector (141, 142) a conveying stretch (TS) for the goods (102) is formed by means of the at least one conveying element (103), wherein the at least one conveying element (103) is guided in a sliding manner preferably at least along the conveying stretch (TS) on at least one slide rail (113), wherein the at least one, preferably provided slide rail (113) is arranged at least in sections along the conveying stretch (TS) on at least one profile element (112), wherein the at least one profile element (112) is arranged by means of at least one releasable fastening device on at least on base support (111) of the machine frame (110), and wherein the at least one releasable fastening device to connect the profile element (112) to the base support (111) is configured as a quick-release device (2), and wherein the quick-release device (2) has fastening sections (BA1, BA2) each extending along a central axis (MA) of the quick-release device (2), and being opposite each other, and with which the profile element (112) and/or the base support (111) can be connected, **characterised in that** the quick-release device (2) in the first fastening section (BA1) has a first locking section (VA1) on its free end and in the second fastening section (BA2) a second locking section (VA2) on its free end, **in that** the base support (111) for the releasably clamping fastening has a pre-drilled hole or aperture (20) deviating from the circular form at least in one partially flat section (23), the cross-section of which is adapted to the longitudinal section of the first locking section (VA1), this being such that the first locking section (VA1) can be guided through the pre-drilled hole (20) and the quick-release device (2) can be fastened in a clamping manner to the first fastening section (BA1) on the base support (111) by rotating around the central longitudinal axis (MA), and that the profile element (112) has at least one profiling section (22) forming a recess (21), the profiling section cross-section being adapted to the cross-section of the second locking section (VA2), such that for the releasably clamping fastening of the second fastening section (BA2) on the profile element (112) by rotating the second locking section (VA2) around the central longitudinal axis (MA), the second locking section (VA2) can be held in the recess (21) at least in sections in a form-fitting manner.

2. Conveying device according to claim 1, **characterised in that** the quick-release device (2) is configured adjustably between a locking position (VP) and a release position (FP), such that the quick-release device (2) in the locking position (VP) connects the profile element (112) firmly but releasably to the base support (111) and releases it again in the release position (FP).

3. Conveying device according to one of the previous claims, **characterised in that** the first and/or second fastening section BA1, BA2 is configured for the force-locking and/or form-fitting connection in the locking position (VP) of the quick-release device (2).

4. Conveying device according to one of the previous claims, **characterised in that** the first fastening section (BA1) in the locking position (VP) is inserted into the base support (111) and in particular into a pre-drilled hole (20) in the base support (111).

5. Conveying device according to one of the previous claims, **characterised in that** the first and/or second fastening section (BA1, BA2) in the locking position (VP) is snapped into the profile element (112) and/or the base support (111).

6. Conveying device according to claim 5, **characterised in that** the first fastening section (BA1) in the locking position (VP) is firmly connected to the base support (111), while the first fastening section (BA1) with a locking element (25) engages behind the pre-drilled hole (20) of the base support (111).

7. Conveying device according to one of the previous claims, **characterised in that** the quick-release device (2) is configured rotatably around a central longitudinal axis (MA) between a locking position (VP) and a release position (FP).

8. Conveying device according to one of the previous claims, **characterised in that** the quick-release device (2) is configured as a twist-lock device which in the locking position (VP) creates a force-locking and/or form-fitting connection.

9. Conveying device according to one of the previous claims, **characterised in that** the first fastening section (BA1) has the first locking section (VA1) on the free end with at least one locking element (25) extending outwards radially from the central longitudinal axis (MA).

10. Conveying device according to claim 9, **characterised in that** the first fastening section (BA1) has a first contact section (AL1) immediately after the first locking section (VA1) on the free end, along the central longitudinal axis (MA), said plant section forming a groove (24) extending perpendicular to the central longitudinal axis.

11. Conveying device according to claim 10, **characterised in that** the groove (24) is configured at least partially circumferentially, preferably fully circumferentially, around the central longitudinal axis (MA) and forms a contact surface (AF) on the surface section facing the base support (111).

12. Conveying device according to one of claims 9 to 11, **characterised in that** in a locking position (VP) the at least one locking element (25) is guided through the pre-drilled hole (20) and the fastening device (2) is rotated by preferably 40 degrees relative to the first component (BT1) from a release position (FP) into the locking position (VP), such that the at least one locking element (25) engages the pre-drilled hole (20) in the locking position (VP) and is supported on the flat section (23) on the side facing away from the second fastening section (BA2) at least partially around the pre-drilled hole (20) on the flat section (23).

13. Conveying device according to claim 9 and 12, **characterised in that** by rotating the first locking section (VA1) the at least one locking element (25) comes to lie in a clamping and contact-locking manner on the flat section (23) of the base support (111) on the side facing away from the second fastening section (BA2), such that the base support (111) in the flat section (23) on the side facing the second fastening section (BA2) is pressed against the contact surface (AF) of the groove (24) and the flat section (23) is held in a clamping manner between the contact surface (AF) and the locking element (25).

14. Conveying device according to claim 1, **characterised in that** the quick-release device (2) has in its second locking section (VA2) a clamping body (30), the largest length (L) of which is its lateral cross-section of the locking position (VP) at the end section (30.1) facing the profile element (112) and which narrows in cross-section along the central longitudinal axis (MA) in the direction of the first fastening section (BA1).

15. Conveying device according to claim 14, **characterised in that** the clamping body (30) has straight contact surfaces (30.2, 30.3) on at least two opposite sides in the area of its free end section (30.1).

16. Conveying device according to claim 14 or 15, **characterised in that** the profile element (112) has at least in its profiling section (22) one central and two lateral arm sections (22.1, 22.2), which are configured basically in a C shape in cross-section and form the recess (21).

17. Conveying device according to claim 16, **characterised in that** the clamping body (30) is wedged in a clamping manner in the locking position (VP) at least with the straight contact surfaces (30.2, 30.3) of the free end section (30.1) against the corresponding inner sides of the lateral arm section (22.2) of the profiling section (22) so that the clamping body (30) forms a clamping fit in the recess (21).

18. Conveying device according to one of the claims 16 to 17, **characterised in that** the clamping body (30) in the lateral cross-section of the release position (FP) has a width (B) which is adapted to the cross-section of the profiling section (22) in such a way that the clamping body (30) in its release position (FP) can be guided into the recess (21) formed by the profiling section (22).

19. Conveying device according to one of the previous claims, **characterised in that** the at least one quick-release device (2) is configured for the direct or indirect releasable connection of further components or parts on the machine frame (110), wherein the components or parts are electrical components, for example repair switches and/or sensors, and/or mechanical components, for example mirrors for light barriers and/or brackets for railings to guide containers and/or retaining plates and/or retaining strips and/or switching cabinets to house electrical circuits.

## Revendications

1. Dispositif de transport pour transporter des marchandises à transporter (102) dans une direction de transport (A), comprenant au moins un châssis de machine (110), sur lequel est disposé au moins un élément de transport (103) formant une boucle et entraîné en rotation, dans lequel l'élément de transport (103) est guidé par un système de déviation avant (141) par rapport à la direction de transport (A) ainsi que par un système de déviation arrière (142) par rapport à la direction de transport (A), dans lequel un tronçon de transport (TS) pour les marchandises à transporter (102) est réalisé entre le système de déviation avant et le système de déviation arrière (141, 142) au moyen de l'au moins un élément de transport (103), dans lequel l'au moins un élément de transport (103) est guidé de préférence en appui par glissement au moins le long du tronçon de transport (TS) sur au moins une glissière (113), dans lequel l'au moins une glissière (113) de préférence prévue est disposée au moins par sections le long du tronçon de transport (TS) sur au moins un élément profilé (112), dans lequel l'au moins un élément profilé (112) est disposé sur au moins un support de base (111) du châssis de machine (110) par l'intermédiaire d'au moins un système de fixation amovible, et dans lequel l'au moins un système de fixation amovible est réalisé comme un système de fixation rapide (2) pour relier l'élément profilé (112) au support de base (111), et dans lequel le système de fixation rapide (2) présente respectivement une section de fixation (BA1, BA2) opposée et s'étendant le long d'un axe longitudinal central (MA) du système de fixation rapide (2), avec laquelle l'élément profilé (112) et/ou le support de base (111) peuvent être reliés, **caractérisé en ce que** le système de fixation rapide (2) présente dans la première section de fixation (BA1) une première section de verrouillage (VA1) côté extrémité libre et dans la deuxième section de fixation (BA2) une deuxième section de verrouillage (VA2) côté extrémité libre, que le support de base (111) présente pour la fixation par serrage amovible au moins dans une section au moins par endroits plate (23) un préperçage ou une ouverture (20) déviant de la forme circulaire, dont la section transversale est adaptée à la coupe longitudinale de la première section de verrouillage (VA1), et ce de telle manière que la première section de verrouillage (VA1) peut être guidée à travers le préperçage (20) et le système de fixation rapide (2) peut être fixé par serrage sur le support de base (111) avec la première section de fixation (BA1) par rotation autour de l'axe longitudinal central (MA), et que l'élément profilé (112) présente au moins une section de profilage (22) réalisant un évidement (21), dont la section transversale est adaptée à la section transversale de la deuxième section de verrouillage (VA2), et ce de telle manière que pour la fixation par serrage amovible de la deuxième section de fixation (BA2) sur l'élément profilé (112), la deuxième section de verrouillage (VA2) peut être au moins en partie reçue dans l'évidement (21) par complémentarité de forme au moins par sections par rotation de la deuxième section de verrouillage (VA2) autour de l'axe longitudinal central (MA).

2. Dispositif de transport selon la revendication 1, **caractérisé en ce que** le système de fixation rapide (2) est réalisé de manière à pouvoir être ajusté entre une position de verrouillage (VP) et une position de libération (FP), et ce, de telle manière que le système de fixation rapide (2) relie, dans la position de verrouillage (VP), l'élément profilé (112) fixement toutefois de manière amovible au support de base (111) et le libère à nouveau dans la position de libération (FP).

3. Dispositif de transport selon l'une quelconque des revendications précédentes, **caractérisé en ce que** la première et/ou la deuxième section de fixation BA1, BA2 sont réalisées pour la liaison à force et/ou par complémentarité de forme dans la position de verrouillage (VP) du système de fixation rapide (2).

4. Dispositif de transport selon l'une quelconque des revendications précédentes, **caractérisé en ce que** la première section de fixation (BA1) est enfichée dans la position de verrouillage (VP) dans le support de base (111) et à savoir en particulier dans un préperçage (20) du support de base (111).

5. Dispositif de transport selon l'une quelconque des revendications précédentes, **caractérisé en ce que** la première et/ou la deuxième section de fixation (BA1, BA2) sont encliquetées dans la position de verrouillage (VP) dans l'élément profilé (112) et/ou le support de base (111).

6. Dispositif de transport selon la revendication 5, **caractérisé en ce que** la première section de fixation (BA1) est reliée fixement au support de base (111) dans la position de verrouillage (VP) **en ce que** la première section de fixation (BA1) vient en prise par l'arrière avec un élément de verrouillage (25) avec le préperçage (20) du support de base (111).

7. Dispositif de transport selon l'une quelconque des revendications précédentes, **caractérisé en ce que** le système de fixation rapide (2) est réalisé de manière à pouvoir tourner autour d'un axe longitudinal central (MA) entre une position de verrouillage (VP) et une position de libération (FP).

8. Dispositif de transport selon l'une quelconque des revendications précédentes, **caractérisé en ce que** le système de fixation rapide (2) est formé comme un système de verrouillage rotatif qui établit, dans la position de verrouillage (VP), une liaison à force et/ou par complémentarité de forme.

9. Dispositif de transport selon l'une quelconque des revendications précédentes, **caractérisé en ce que** la première section de fixation (BA1) présente la première section de verrouillage (VA1) côté extrémité libre avec au moins un élément de verrouillage (25) s'étendant radialement vers l'extérieur à partir de l'axe longitudinal central (MA).

10. Dispositif de transport selon la revendication 9, **caractérisé en ce que** la première section de fixation (BA1) présente une première section d'appui (AL1) se raccordant sur la première section de verrouillage (VA1) côté extrémité libre à celle-ci le long de l'axe longitudinal central (MA), qui forme une rainure de réception (24) s'étendant perpendiculairement à l'axe longitudinal central.

11. Dispositif de transport selon la revendication 10, **caractérisé en ce que** la rainure de réception (24) est réalisée au moins en partie sur toute la périphérie, de préférence sur toute la périphérie, autour de l'axe longitudinal central (MA) et réalise une surface d'appui (AF) sur la section de surface tournée vers le support de base (111).

12. Dispositif de transport selon l'une quelconque des revendications 9 à 11, **caractérisé en ce que**, dans une position de verrouillage (VP), l'au moins un élément de verrouillage (25) est guidé à travers le préperçage (20) et le système de fixation (2) est tourné de préférence de 40° par rapport au premier composant (BT1) d'une position de libération (FP) dans la position de verrouillage (VP), et ce de telle mani_re que l'au moins un élément de verrouillage (25) vient en prise par l'arrière avec le préperçage (20) dans la position de verrouillage (VP) et prend appui sur la section plate (23) sur le côté opposé à la deuxième section de fixation (BA2) au moins en partie autour du préperçage (20) sur la section plate (23).

13. Dispositif de transport selon les revendications 9 et 12, **caractérisé en ce que** l'au moins un élément de verrouillage (25) parvient, par la rotation de la première section de verrouillage (VA1), à venir en appui par serrage et par liaison de contact sur la section plate (23) du support de base (111) sur le côté opposé à la deuxième section de fixation (BA2), et ce de telle manière que le support de base (111) dans la section plate (23) sur le deuxième côté tourné vers la deuxième section de fixation (BA2) est poussé contre la surface d'appui (AF) de la rainure de réception (24) et la section plate (23) est maintenue par serrage entre la surface d'appui (AF) et l'élément de verrouillage (25).

14. Dispositif de transport selon la revendication 1, **caractérisé en ce que** le système de fixation rapide (2) présente dans sa deuxième section de verrouillage (VA2) un corps de serrage (30) qui présente dans sa section transversale latérale de la position de verrouillage (VP) la plus grande longueur (L) sur la section d'extrémité (30.1) tournée vers l'élément profilé (112) et se rétrécit dans la section transversale le long de l'axe longitudinal central (MA) en direction de la première section de fixation (BA1).

15. Dispositif de transport selon la revendication 14, **caractérisé en ce que** le corps de serrage (30) présente des surfaces d'appui respectivement droites (30.2, 30.3) dans la zone de sa section d'extrémité libre (30.1) sur au moins deux côtés opposés.

16. Dispositif de transport selon la revendication 14 ou 15, **caractérisé en ce que** l'élément profilé (112) présente au moins dans sa section de profilage (22) une section de branche centrale ainsi que deux sections de branche latérales (22.1, 22.2) qui sont réalisées dans la section transversale sensiblement en forme de C et réalisent l'évidement (21).

17. Dispositif de transport selon la revendication 16, **caractérisé en ce que** le corps de serrage (30) s'écarte dans la position de verrouillage (VP) au moins avec les surfaces d'appui droites (30.2, 30.3) de la section d'extrémité libre (30.1) par serrage contre les côtés intérieurs correspondants de la section de branche latérale (22.2) de la section de profilage (22), de telle sorte que le corps de serrage (30) réalise un siège de serrage dans l'évidement (21).

18. Dispositif de transport selon l'une quelconque des revendications 16 à 17, **caractérisé en ce que** le corps de serrage (30) présente dans la section transversale latérale de la position de libération (FP) une largeur (B) qui est adaptée à la section transversale de la section de profilage (22) de telle manière que le corps de serrage (30) peut être introduit dans sa position de libération (FP) dans l'évidement (21) réalisé par la section de profilage (22).

19. Dispositif de transport selon l'une quelconque des revendications précédentes, **caractérisé en ce que** l'au moins un système de fixation rapide (2) est réalisé pour la liaison directe ou indirecte amovible d'autres composants ou composantes sur le châssis de machine (110), dans lequel les composants ou composantes sont des composants électriques, par exemple des interrupteurs de réparation et/ou capteurs, et/ou des composants mécaniques, par exemple des miroirs pour barrières lumineuses et/ou des supports pour garde-corps pour le guidage de contenants et/ou de tôles de maintien et/ou de baguettes de maintien et/ou de boîtiers de commande pour le logement de circuits électriques.
